# EUROPEAN PATENT APPLICATION

(11) **EP 4 617 801 A1**
(43) Date of publication of application: **17.09.2025**
(21) Application number: 24201144.3
(22) Date of filing: 18.09.2024
(51) Int. Cl.: G05B 19/05, G05B 19/042, B25J 11/00, G05B 19/414

(54) **CONTROL SYSTEM, CONTROL MEDIATION DEVICE, AND CONTROL MEDIATION METHOD**

(30) Priority: 14.03.2024 JP 2024040538
(71) Applicant: Hitachi, Ltd., Tokyo 100-8280 (JP)
(72) Inventor: TANAKA, Yuki, Tokyo, 100-8280 (JP); AONO, Masahiro, Tokyo, 100-8280 (JP); MARUYAMA, Tatsuya, Tokyo, 100-8280 (JP); OTSUKA, Yusaku, Tokyo, 100-8280 (JP); SHIMIZU, Toshiki, Tokyo, 100-8280 (JP)
(74) Representative: Mewburn Ellis LLP

(57) **Abstract**

Disclosed is a technology for easily implementing multi-phase control that flexibly combines a plurality of control services. A control system includes a plurality of control services and a mediation device. The plurality of control services each output an individual command value for controlling a control target. The mediation device acquires the individual command values from the control services and generates, on the basis of the acquired individual command values, an output command value to be given to the control target. The mediation device assigns, to each of the plurality of individual command values, an acquisition time indicating the time at which the individual command value was acquired, notifies the plurality of control services of command sharing information including the individual command values and the acquisition times, generates timing instruction information for specifying a next instruction time for each of the control services, on the basis of the number of control services and the acquisition time of the individual command value of each of the control services, and notifies each of the control services of the generated timing instruction information. Each of the control services generates an individual command value on the basis of the individual command values and acquisition times included in the command sharing information and the instruction time included in the timing instruction information.

## Description

### BACKGROUND OF THE INVENTION

### 1. Field of the Invention

The present disclosure relates to a technology for controlling a control target.

### 2. Description of the Related Art

A configuration in which a plurality of control devices perform control of the same control target is being studied as the configuration of a system for implementing control of, for example, infrastructure facilities and factory equipment. The configuration in which a plurality of entities perform control of the same control target is hereinafter referred to as multi-phase control.

Further, the implementation of a control entity on a cloud platform is also being studied. The control entity configured as a physical device and the control entity implemented on a computer, such as a server, or on a cloud platform are hereinafter collectively referred to as a control service.

Multi-phase control and the configuration in which control services are deployed on a cloud platform make it possible to provide advanced real-time control and make flexible configuration changes.

A robot control device disclosed in JP-2015-074063-A includes a plurality of first control sections and a second control section. The first control sections each output a first command value for moving an endpoint of a movable section of a robot. The second control section controls the movable section by using a second command value that is obtained by adding up the first command values outputted by the plurality of first control sections.

A gateway device disclosed in JP-2009-239478-A includes a translator and one or more aggregators. The translator is connected to a controller through a first network, is connected through a second network to a plurality of clients that transmit control commands, and is configured to perform protocol conversion of the control commands received from the clients. The aggregators aggregate the control commands.

### SUMMARY OF THE INVENTION

In a situation where a new control system is to be built by combining a plurality of control services, it is expected that diverse needs will be promptly responded to by reusing existing control services. Further, it is demanded that control services be easily added or removed as needed to provide flexible control improvement.

However, when control services are to be added or removed in a conventional control system, it is necessary to manually match the format of data output between the control services and to provide each control service with information regarding the timing at which a control target should be driven under the control of the control services. This results in an increase in man-hours and thus hampers a flexible response to the diverse needs.

An object of the present disclosure is to provide a technology for easily implementing multi-phase control that flexibly combines a plurality of control services.

According to an embodiment of the present invention, there is provided a control system including a plurality of control services that each output an individual command value that is a command value for controlling a control target, and a mediation device that acquires the individual command values from the control services and generates, on the basis of the acquired individual command values, an output command value that is a command value to be given to the control target. The mediation device assigns, to each of the individual command values, an acquisition time indicating a time at which the individual command value was acquired, notifies the plurality of control services of command sharing information including the individual command values and the acquisition times, generates timing instruction information for indicating an instruction time that is a time of a next command for each of the control services, on the basis of the number of control services and the acquisition time of the individual command value of each of the control services, and notifies each of the control services of the generated timing instruction information. Each of the control services generates an individual command value on the basis of the individual command values and acquisition times included in the command sharing information and the instruction time included in the timing instruction information.

According to another embodiment of the present invention, there is provided a control mediation device that is included in a control system for controlling a control target by using a plurality of control services and that is configured to mediate individual command values that are commands from the control services, to the control target. The control mediation device includes a timestamping section that assigns, to each of the plurality of individual command values, an acquisition time indicating a time at which the individual command value was acquired, a command value sharing section that notifies the plurality of control services of command sharing information including the individual command values and the acquisition times, a timing instruction section that generates timing instruction information for specifying an instruction time that is a time of a next command for each of the control services, on the basis of the number of control services and the acquisition time of the individual command value of each of the control services, and notifies each of the control services of the generated timing instruction information, and an output command generation section that generates an output command value to be inputted to the control target, on the basis of the plurality of individual command values generated in each of the control services on the basis of the individual command values and acquisition times included in the command sharing information and the instruction time included in the timing instruction information.

According to yet another embodiment of the present invention, there is provided a control mediation method that is adopted by a control system for controlling a control target by using a plurality of control services and that is configured to mediate individual command values that are commands from the control services, to the control target. The control mediation method includes assigning, to each of the plurality of individual command values, an acquisition time indicating a time at which the individual command value was acquired, notifying the plurality of control services of command sharing information including the individual command values and the acquisition times, generating timing instruction information for specifying an instruction time that is a time of a next command for each of the control services, on the basis of the number of control services and the acquisition time of the individual command value of each of the control services, and notifying each of the control services of the generated timing instruction information, and generating an output command value to be inputted to the control target, on the basis of the plurality of individual command values generated in each of the control services on the basis of the individual command values and acquisition times included in the command sharing information and the instruction time included in the timing instruction information.

The present invention makes it easy to implement multi-phase control that flexibly combines a plurality of control services.

### BRIEF DESCRIPTION OF THE DRAWINGS

FIG. 1 is a block diagram illustrating a control system according to a first embodiment of the present invention;
FIG. 2 is an explanatory diagram illustrating multi-phase control according to the first embodiment;
FIG. 3 is a conceptual diagram illustrating data to be stored in a memory area of a control device according to the first embodiment;
FIG. 4 is a conceptual diagram illustrating data to be acquired by a mediation device according to the first embodiment;
FIG. 5 is a block diagram illustrating an example of a configuration of an output command value generation section according to the first embodiment;
FIG. 6 is a conceptual diagram illustrating an output command value generation process according to the first embodiment;
FIG. 7 is a block diagram illustrating an example of a configuration of a timestamping section according to the first embodiment;
FIG. 8 is a conceptual diagram illustrating a timestamped command value according to the first embodiment;
FIG. 9 is a block diagram illustrating an example of a configuration of a drive timing instruction section according to the first embodiment;
FIG. 10 is a conceptual diagram illustrating an example of drive timing change processing by the drive timing instruction section according to the first embodiment;
FIG. 11 is a conceptual diagram illustrating a process of identifying the number of control devices according to the first embodiment;
FIG. 12 is a conceptual diagram illustrating a drive timing according to the first embodiment in a case where there is no timing change;
FIG. 13 is a conceptual diagram illustrating the drive timing according to the first embodiment in a case where there is a timing change due to a change in the number of control devices;
FIG. 14 is a block diagram illustrating a control system according to a second embodiment of the present invention;
FIG. 15 is a conceptual diagram illustrating data to be stored in the memory area of the control device according to the second embodiment;
FIG. 16 is a block diagram illustrating an example of a configuration of an output timing instruction section according to the second embodiment;
FIG. 17 is a conceptual diagram illustrating an output timing according to the second embodiment in a case where there is no timing change;
FIG. 18 is a conceptual diagram illustrating the output timing according to the second embodiment in a case where there is a timing change due to a change in the number of control devices;
FIG. 19 is a conceptual diagram illustrating command values in a case where there are different types of commands according to a third embodiment of the present invention;
FIG. 20 is a conceptual diagram illustrating an example of output command value calculation in a case where there are different types of commands according to the third embodiment;
FIG. 21 is a block diagram illustrating a control system according to a fourth embodiment of the present invention;
FIG. 22 is a conceptual diagram illustrating data to be stored in the memory area of the control device according to the fourth embodiment;
FIG. 23 is a conceptual diagram illustrating an example of processing by the mediation device according to the fourth embodiment in a case where a plurality of control targets exist; and
FIG. 24 is a block diagram illustrating a control system according to a fifth embodiment of the present invention.

### DESCRIPTION OF THE PREFERRED EMBODIMENTS

Embodiments of the present invention will now be described with reference to the accompanying drawings.

### [First Embodiment]

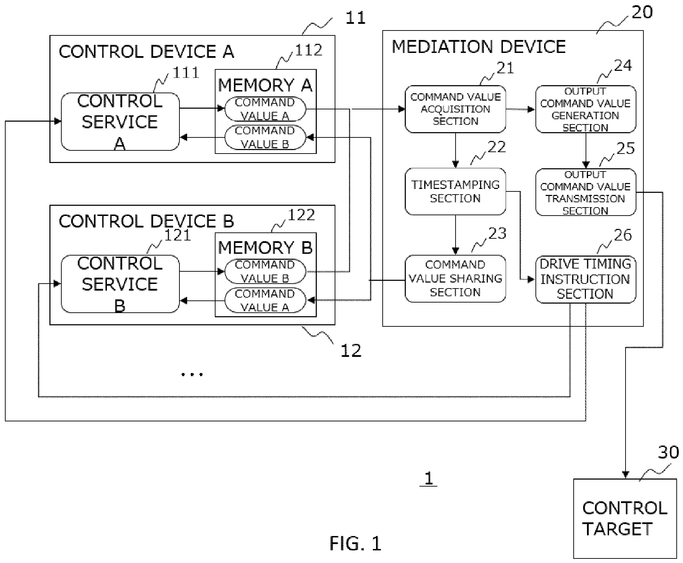

FIG. 1 is a block diagram illustrating a control system according to a first embodiment of the present invention.

A control system 1 includes a plurality of control services and a mediation device 20. The plurality of control services each output an individual command value that is a command value for controlling a control target 30. The mediation device 20 acquires the individual command values from the control services and generates, on the basis of the acquired individual command values, an output command value that is a command value to be given to the control target 30.

In the present embodiment, the plurality of control services are provided by different control devices. For example, a control service A is provided by a control device 11, and a control service B is provided by a control device 12. However, the plurality of control services may alternatively be provided by a single control device.

The control device 11 includes a control service 111 and a memory 112. The control service 111 is executed by a processor included in the control device 11. The control service 111 outputs a command value A to the memory 112. The control service 111 acquires a command value B from the memory 112.

The command value A is a command value used by the control service 111. The command value B is a command value used by a control service 121.

The mediation device 20 includes at least one processor and at least one memory.

The processor includes, for example, a central processing unit (CPU), a micro processing unit (MPU), a graphics processing unit (GPU), and a field-programmable gate array (FPGA). The processor functionally implements a command value acquisition section 21, a timestamping section 22, a command value sharing section 23, an output command value generation section 24, an output command value transmission section 25, and a drive timing instruction section 26 by reading and executing a construction information correction support program stored in the memory.

The command value acquisition section 21 has a function of acquiring, from the control services, the individual command values that are command values for controlling the control target 30. In the example depicted in FIG. 1, the command value acquisition section 21 acquires an individual command value A that is stored in the memory 112 of the control device 11 and an individual command value B that is stored in a memory 122 of the control device 12.

The timestamping section 22 has a function of assigning, to each of a plurality of individual command values, an acquisition time that is the time at which the relevant individual command value was acquired. In the example depicted in FIG. 1, the timestamping section 22 assigns an acquisition time to each of the acquired individual command values A and B.

The command value sharing section 23 has a function of notifying the plurality of control services of command sharing information including an individual command value and an acquisition time. In the example depicted in FIG. 1, the command value sharing section 23 notifies the control service 121 of the command sharing information including the individual command value A and the acquisition time by causing such command sharing information to be stored in the memory 122 of the control device 12. The command value sharing section 23 notifies the control service 111 of the command sharing information including the individual command value B and the acquisition time by causing such command sharing information to be stored in the memory 112 of the control device 11.

The control services are notified of the command sharing information including the individual command values and acquisition times in order to store such information in the memories for the control services as control performance data. Next, the control services calculate commands on the basis of such performance data.

The output command value generation section 24 has a function of generating an output command value that is a command value to be given to the control target 30, on the basis of the plurality of individual command values acquired from the control services.

The output command value transmission section 25 has a function of transmitting the generated output command value to the control target 30.

The drive timing instruction section 26 has a function of generating timing instruction information for indicating an instruction time that is the time of the next command of each control service, on the basis of the number of control services and the acquisition time of the individual command value of each control service, and notifying each control service of the generated timing instruction information.

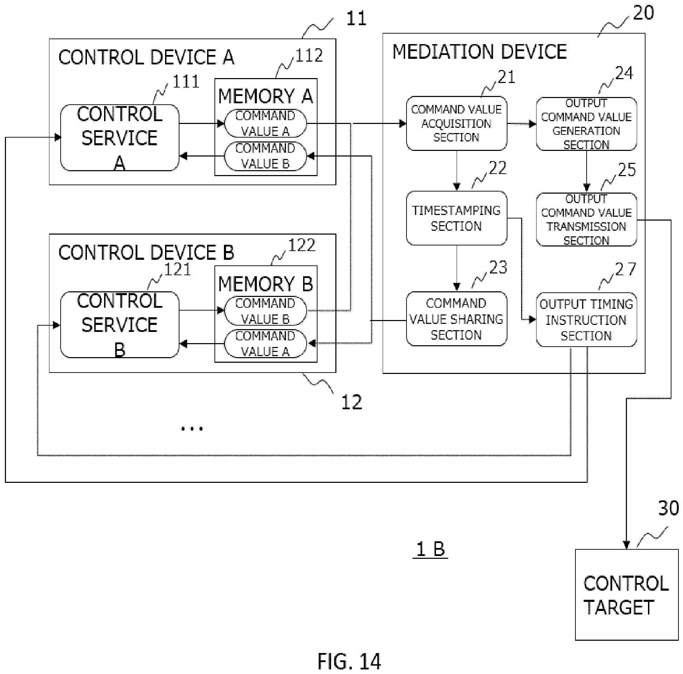

The time of a command corresponds to a drive timing in the example of FIG. 1, and corresponds to an output timing in the example depicted in FIG. 14 described later. The instruction time is an output time at which the control service outputs the individual command value, or is a drive time at which the control service starts processing to generate the individual command value.

With reference again to the configuration of the control device 11, each control service of the control device 11 generates an individual command value on the basis of the individual command values and acquisition times included in the command sharing information and the instruction time included in the timing instruction information.

The mediation device 20 may identify time intervals between the instruction times that the respective control services are notified of, and generate the output command value in such a manner that the individual command values acquired from the respective control services are outputted at the identified time intervals.

The mediation device 20 may notify the control services of a period during which the individual command values are outputted and a phase in which the individual command values are outputted within the period, as the timing instruction information. The control services periodically output the individual command values at a time identified by the period and phase included in the timing instruction information.

FIG. 1 illustrates a configuration in which the control devices 11 and 12 and the mediation device 20 are separate from each other. However, an alternative configuration may be adopted. For example, the mediation device 20 may alternatively be included in the control devices having the control services.

Further, the control devices and the mediation device may be disposed at any place. The control devices 11 and 12 may be disposed on a cloud, and the mediation device 20 may be disposed on-site. However, an alternative configuration may be adopted. The control devices and the mediation device may be disposed on-site or disposed on a network other than the site.

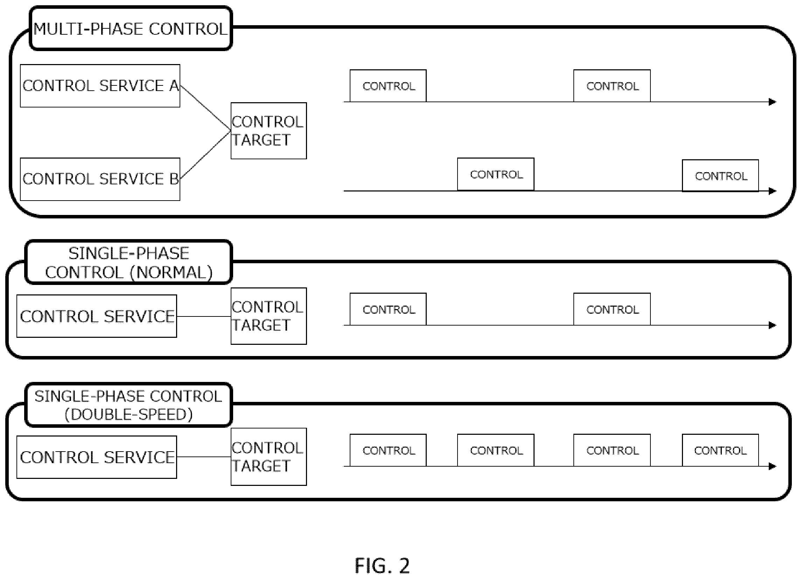

FIG. 2 is an explanatory diagram illustrating multi-phase control according to the present embodiment.

First of all, normal single-phase control will be described. In a case where there is a one-to-one correspondence between a control service and a control target, the control target is controlled in one thread at a predetermined timing in accordance with the progress of time. In the case of double-speed single-phase control, the period of control is halved.

In the case of multi-phase control, a plurality of control services correspond to one control target. In such a case, there are a plurality of threads, and control is sequentially performed. More specifically, the control service A is first controlled, and then the control service B is controlled.

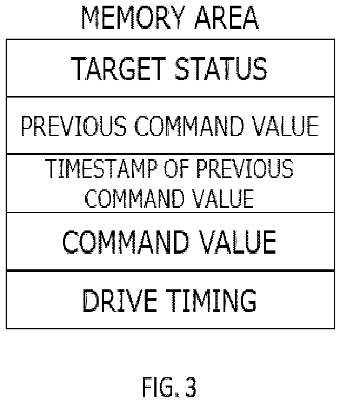

FIG. 3 is a conceptual diagram illustrating data to be stored in a memory area of a control device according to the present embodiment.

The memory area corresponds to, for example, the memory 112 or the memory 122 in FIG. 1. The memory stores a target status, a previous command value, a timestamp of the previous command value, a command value, and a drive timing.

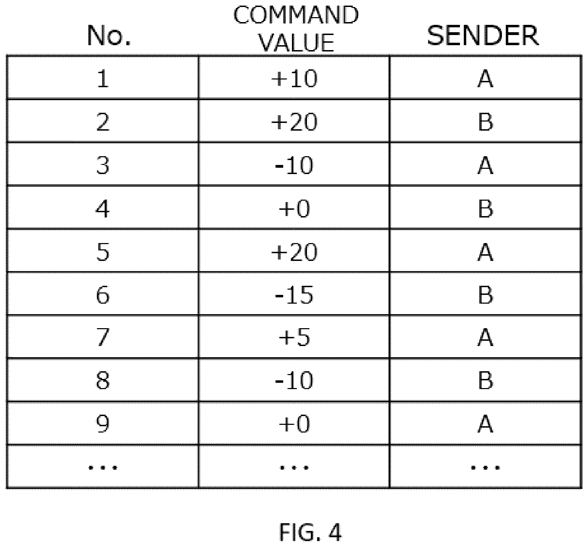

FIG. 4 is a conceptual diagram illustrating data to be acquired by the mediation device according to the present embodiment.

The command value acquisition section 21 acquires a command value and a sender as the data. The command value acquisition section 21 may assign numbers in the order of data acquisition.

The sender may be a number unique to a device acting as the sender, such as the identification number or IP address of the control device.

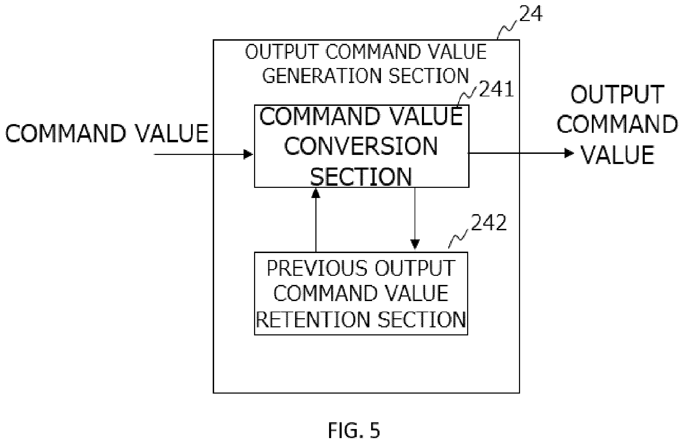

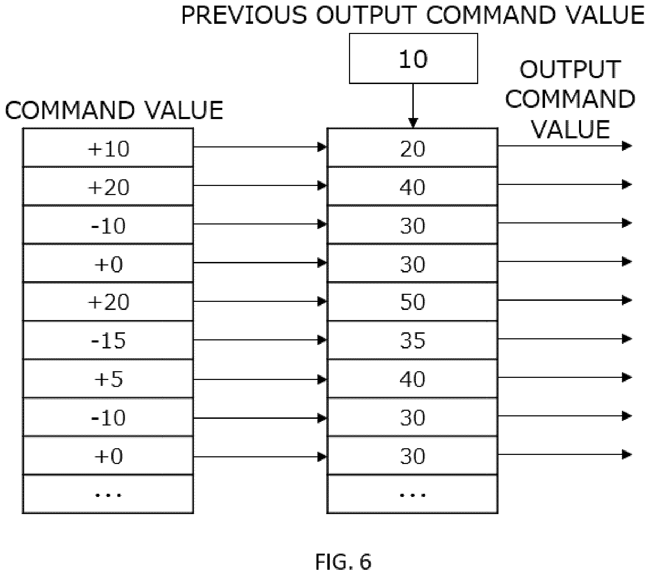

FIG. 5 is a block diagram illustrating an example of a configuration of the output command value generation section according to the present embodiment. FIG. 6 is a conceptual diagram illustrating an output command value generation process according to the present embodiment.

The output command value may be indicated by an operation amount. In this case, the individual command values are indicated by a difference between a current operation amount and a previous operation amount. The mediation device 20 generates the operation amount, which is indicated as the output command value, by integrating the difference indicated as the individual command values.

The output command value generation section 24 includes a command value conversion section 241 and a previous output command value retention section 242. The command value conversion section 241 acquires a command value and causes the acquired command value to be stored in the previous output command value retention section 242. The command value conversion section 241 generates the operation amount, which is indicated as the output command value, by integrating the difference indicated as the individual command values, on the basis of the command value retained in the previous output command value retention section 242.

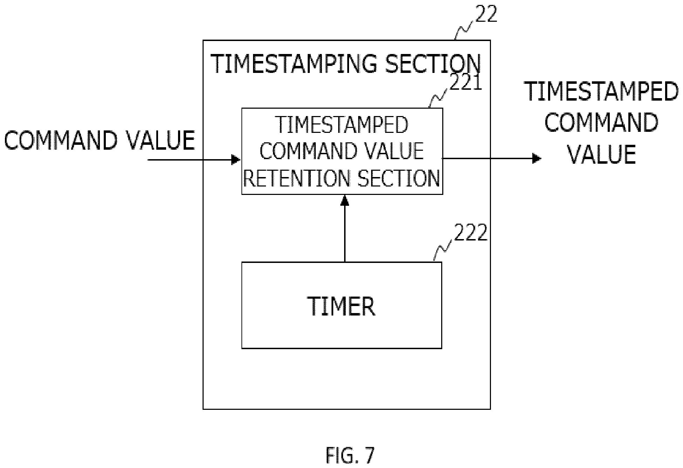

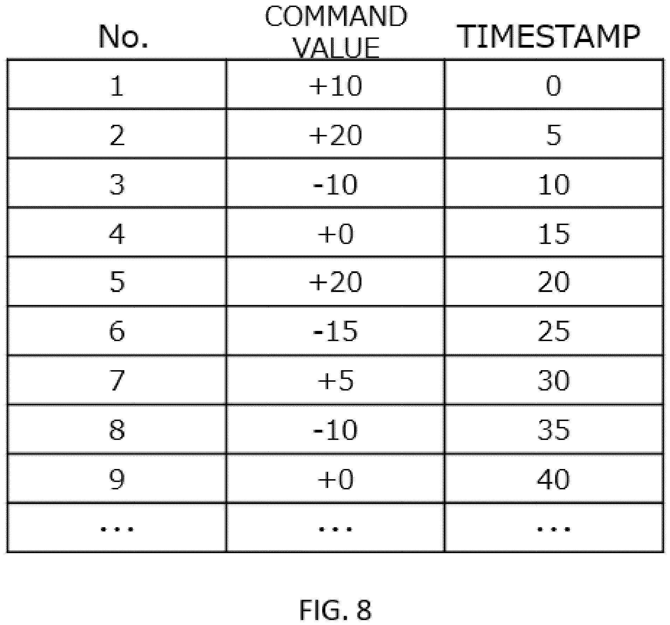

FIG. 7 is a block diagram illustrating an example of a configuration of the timestamping section according to the present embodiment. FIG. 8 is a conceptual diagram illustrating a timestamped command value according to the present embodiment.

The timestamping section 22 includes a timestamped command value retention section 221 and a timer 222. The timer 222 measures time and performs timestamping at a predetermined timing. The timestamped command value retention section 221 acquires a command value from the command value acquisition section 21, stores the timestamped command value that is obtained by assigning timestamp information from the timer 222 to the command value, and outputs the timestamped command value.

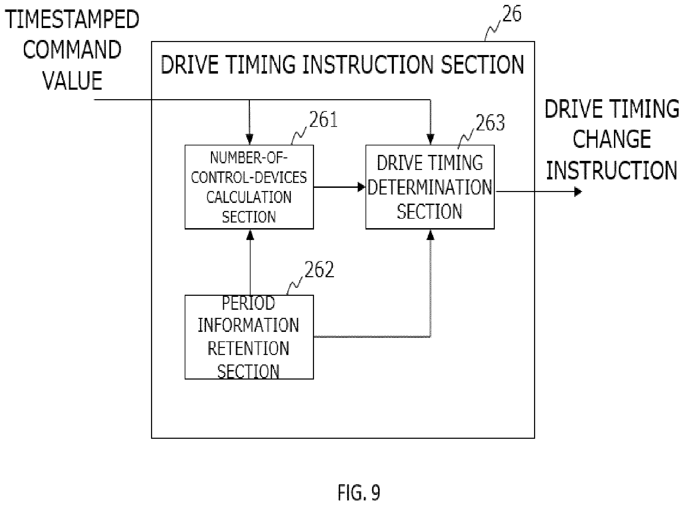

FIG. 9 is a block diagram illustrating an example of a configuration of the drive timing instruction section according to the present embodiment.

The drive timing instruction section 26 includes a number-of-control-devices calculation section 261, a period information retention section 262, and a drive timing determination section 263.

The number-of-control-devices calculation section 261 calculates the number of control devices on the basis of the timestamped command value, for example, in a manner described below. The period information retention section 262 pre-stores information regarding the period, such as information indicating that one period is 10 seconds. The period information retention section 262 outputs the information regarding the period to the number-of-control-devices calculation section 261 and the drive timing determination section 263. The drive timing determination section 263 determines the drive timing on the basis of the timestamped command value, the number of control devices calculated by the number-of-control-devices calculation section 261, and the information regarding the period, and if there is a change in the drive timing, outputs a drive timing change instruction.

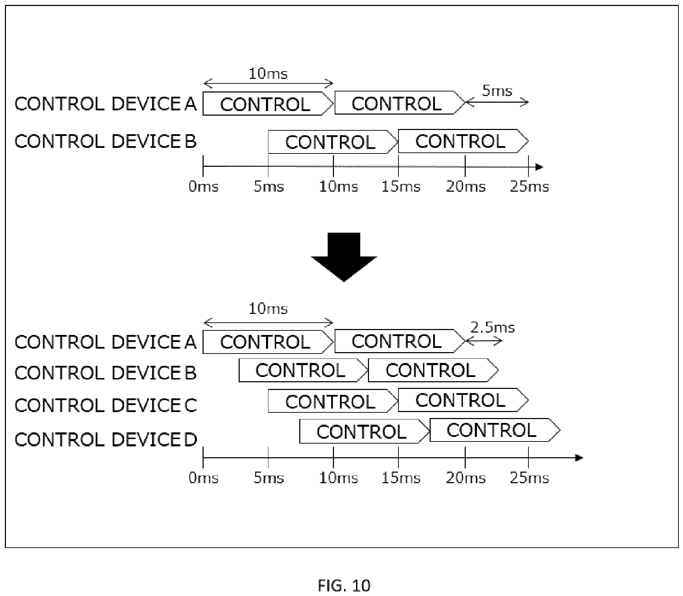

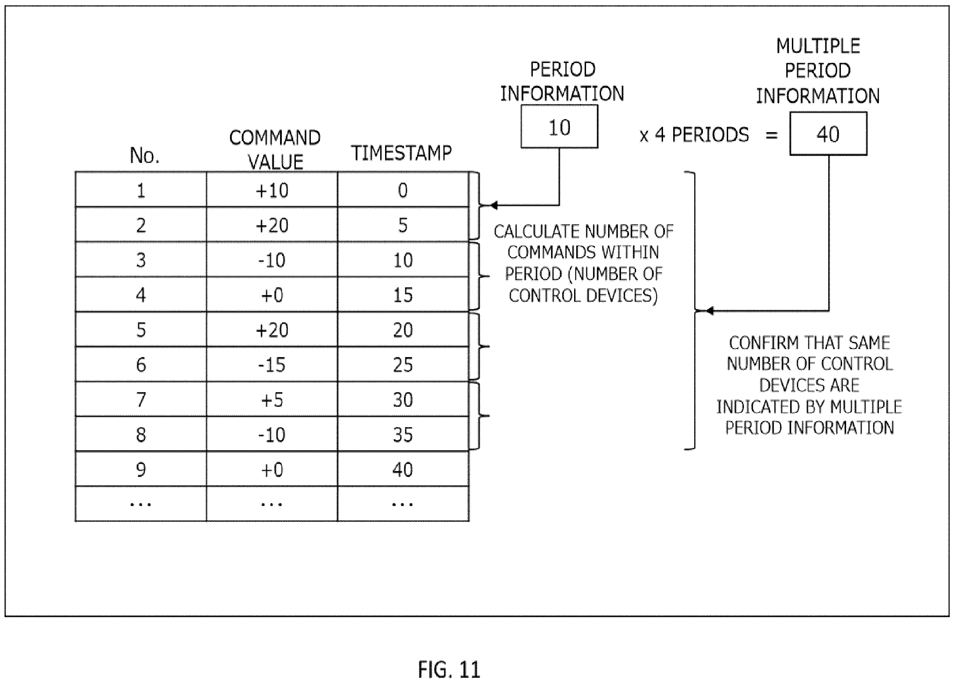

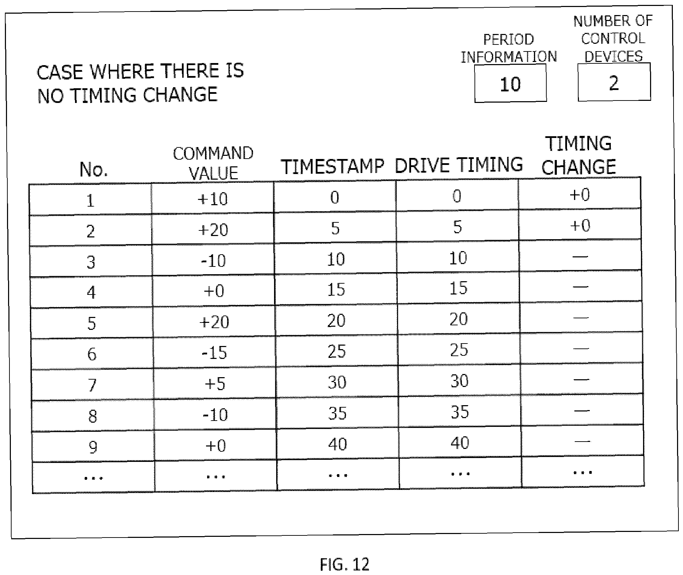

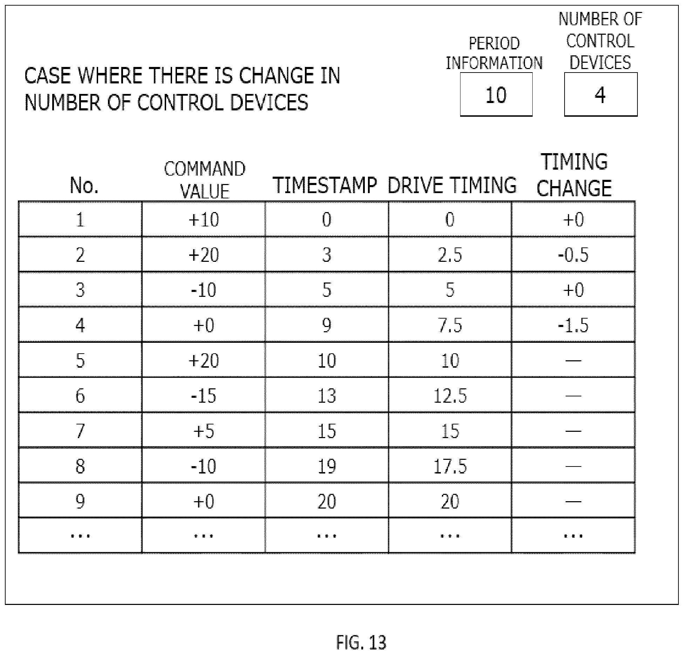

FIG. 10 is a conceptual diagram illustrating an example of drive timing change processing by the drive timing instruction section according to the present embodiment. FIG. 11 is a conceptual diagram illustrating a process of identifying the number of control devices according to the present embodiment. FIG. 12 is a conceptual diagram illustrating the drive timing according to the present embodiment in a case where there is no timing change. FIG. 13 is a conceptual diagram illustrating the drive timing according to the present embodiment in a case where there is a timing change due to a change in the number of control devices.

With reference now to FIGS. 9 and 11, the number-of-control-devices calculation section 261 calculates the number of commands in a period as the number of control devices. For example, in a case where there are two commands in a period of 10 ms, the number-of-control-devices calculation section 261 calculates that the number of control devices is two.

The number-of-control-devices calculation section 261 may confirm the calculated number of control devices. As a method of confirmation, the number of control devices is calculated on the basis of the number of commands included in a plurality of periods. If, for example, eight commands are included in four periods, two commands are included in one period. Therefore, the number of control devices calculated over four periods will be two, which is the same as the number calculated over one period.

Let us now assume that a configuration change has been made in such a manner that the number of control devices is changed from two to four. In the configuration in which there are two control devices, namely, a control device A and a control device B, a time of 10 ms has been allocated to one control. Let us assume that there has been a difference of 5 ms between the timing of control start, i.e., the drive timing, in the control device A and the timing of control start, i.e., the drive timing, in the control device B.

The above-described configuration including two control devices A and B has been changed to include four control devices, i.e., control devices A to D. Since the number-of-control-devices calculation section 261 calculates the number of control devices, for example, in the manner described above, it is possible to detect that the number of control devices has been changed from two to four. In the case where the number-of-control-devices calculation section 261 detects that the number of control devices has been changed to four, the drive timing determination section 263 changes the drive timing of each control device in a manner described below. The time allocated to one control remains at 10 ms. Meanwhile, the control start timing difference between the individual control devices is changed from 5 to 2.5 ms (see FIG. 10). As a result, the drive timing determined by the drive timing determination section 263 changes from the state depicted in FIG. 12 to the state depicted in FIG. 13.

### [Second Embodiment]

FIG. 14 is a block diagram illustrating a control system according to a second embodiment of the present invention.

Component elements of a control system 1B depicted in FIG. 14 that are similar to those of the control system 1 depicted in FIG. 1 will not be redundantly described in detail. The control system 1B includes an output timing instruction section 27 instead of the drive timing instruction section 26.

The output timing instruction section 27 has a function of generating the timing instruction information for indicating the instruction time that is the time of the next command for each control service, on the basis of the number of control services and the acquisition time of the individual command value of each control service, and notifying each control service of the generated timing instruction information. The time of a command in the control system 1B depicted in FIG. 14 corresponds to the output timing. The instruction time is an output time at which the control service outputs the individual command value.

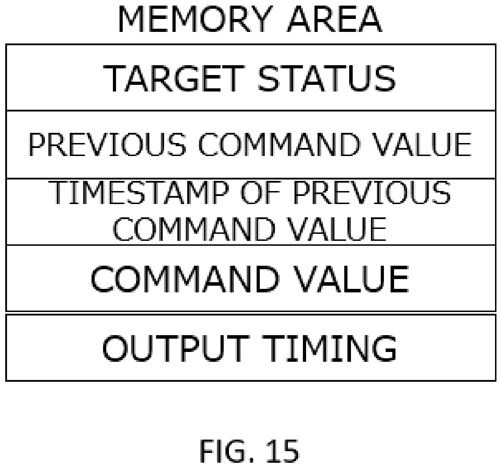

FIG. 15 is a conceptual diagram illustrating data to be stored in the memory area of the control device according to the second embodiment.

The memory area corresponds to, for example, the memory 112 or the memory 122 in FIG. 14. The memory stores a target status, a previous command value, a timestamp of the previous command value, a command value, and an output timing.

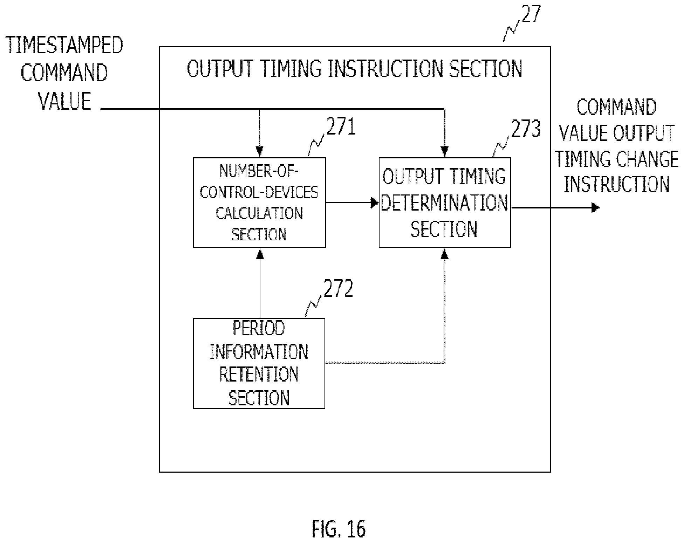

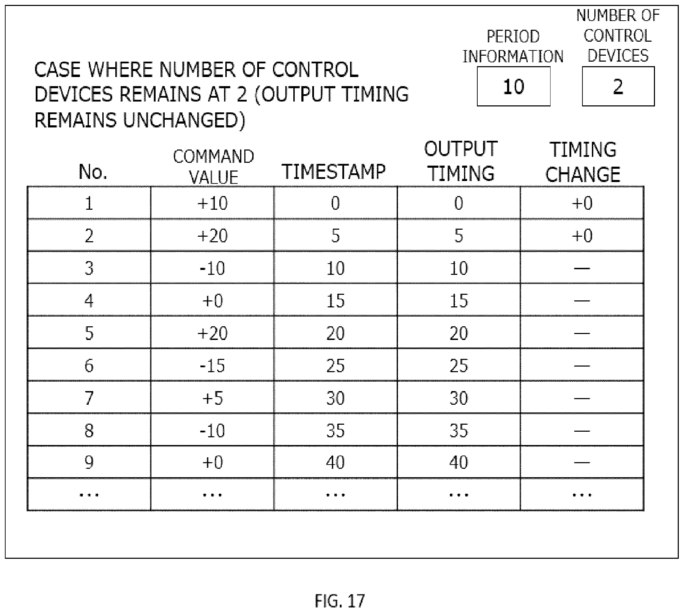

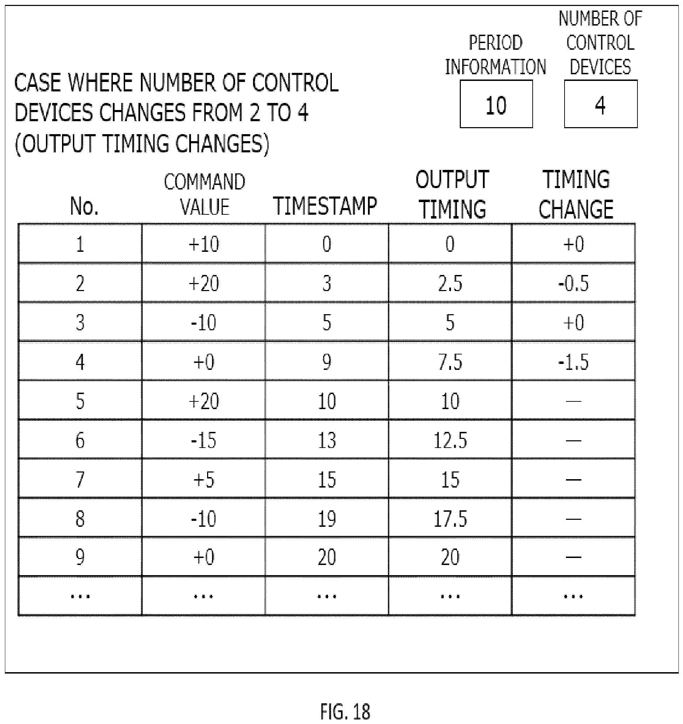

FIG. 16 is a block diagram illustrating an example of a configuration of the output timing instruction section according to the present embodiment. FIG. 17 is a conceptual diagram illustrating the output timing according to the present embodiment in a case where there is no timing change. FIG. 18 is a conceptual diagram illustrating the output timing according to the present embodiment in a case where there is a timing change due to a change in the number of control devices.

The output timing instruction section 27 includes a number-of-control-devices calculation section 271, a period information retention section 272, and an output timing determination section 273.

The number-of-control-devices calculation section 271 calculates the number of control devices on the basis of the timestamped command value, as is the case with the number-of-control-devices calculation section 261. The period information retention section 272 pre-stores the information regarding the period, such as the information indicating that one period is 10 seconds, as is the case with the period information retention section 262. The period information retention section 272 outputs the information regarding the period to the number-of-control-devices calculation section 271 and the output timing determination section 273. The output timing determination section 273 determines the output timing on the basis of the timestamped command value, the number of control devices calculated by the number-of-control-devices calculation section 271, and the information regarding the period, as is the case with the drive timing determination section 263, and if there is a change in the output timing, outputs a command value output timing change instruction.

Let us now assume that a configuration change has been made in such a manner that the number of control devices is changed from two to four, as is the case with the configuration change depicted in FIG. 10. In the configuration in which there are two control devices, namely, the control device A and the control device B, a time of 10 ms has been allocated to one command value output. Let us assume that control has been exercised to create a difference of 5 ms between the output timing in the control device A and the output timing in the control device B.

The above-described configuration including two control devices A and B has been changed to include four control devices, i.e., control devices A to D. Since the number-of-control-devices calculation section 271 calculates the number of control devices, for example, in the manner described above, it is possible to detect that the number of control devices has been changed from two to four. In the case where the number-of-control-devices calculation section 271 detects that the number of control devices has been changed to four, the output timing determination section 273 changes the command value output timing of each control device in a manner described below. The time allocated to one command value output remains at 10 ms. Meanwhile, the command value output timing difference between the individual control devices is changed from 5 to 2.5 ms. As a result, the output timing determined by the output timing determination section 273 changes from the state depicted in FIG. 17 to the state depicted in FIG. 18.

### [Third Embodiment]

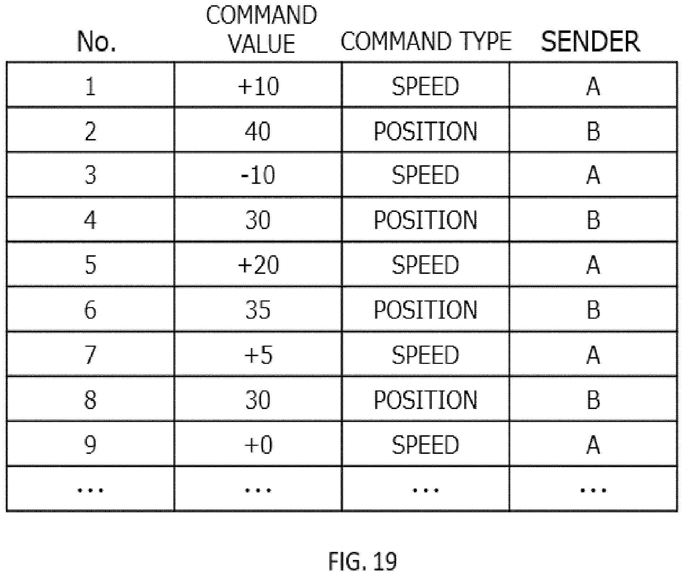

FIG. 19 is a conceptual diagram illustrating command values in a case where there are different types of commands according to a third embodiment of the present invention. In the third embodiment, a system that is configured to provide speed control and position control services generates a current control command value by adding a speed control value to a position control value.

The control services are a mixture of a control service for generating an operation amount as an individual command value and a control service for generating a difference in the operation amount as an individual command value. The mediation device 20 determines, on the basis of the format of the acquired individual command value, whether it is an operation amount or a difference. If the individual command value indicates a difference, the mediation device 20 sets, as the output command value, a current operation amount calculated from the previous operation amount and the difference. Meanwhile, if the individual command value indicates an operation amount, the mediation device 20 sets the operation amount as the output command value.

In FIG. 19, the command value of No. 1 is +10, and its command type is speed. The command value of No. 2 is 40, and its command type is position. Here, the speed corresponds to the difference, and the position corresponds to the operation amount.

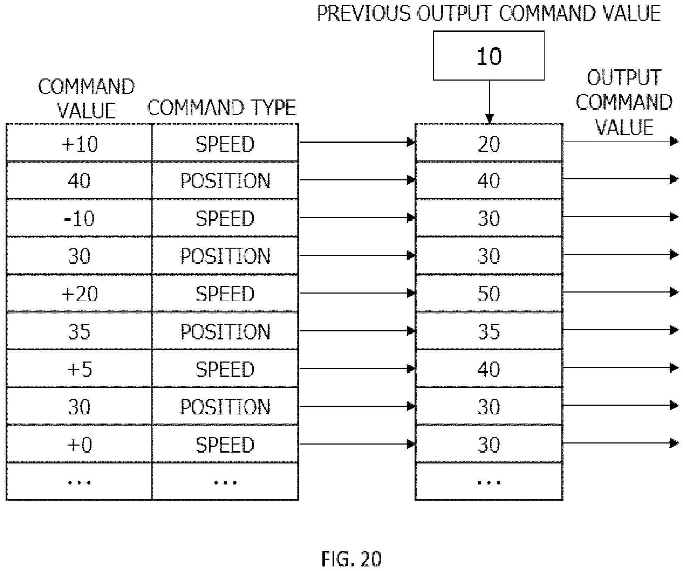

FIG. 20 is a conceptual diagram illustrating an example of output command value calculation in a case where there are different types of commands according to the present embodiment. The previous operation amount is a previous output command value of "10."

The mediation device 20 determines, on the basis of the format of the acquired individual command value, whether it is an operation amount or a difference. For example, a situation where the command value is "+10" and the command type is "speed" corresponds to a case where the individual command value indicates a difference. Therefore, the mediation device 20 sets, as the output command value, the current operation amount "20," which is calculated from the previous operation amount "10" and the difference "+10."

For example, a situation where the command value is "40" and the command type is "position" corresponds to a case where the individual command value is an operation amount. Therefore, the mediation device 20 sets the operation amount "40" as the output command value.

The mediation device 20 may integrate a plurality of individual command values into a common format and generate the output command value.

### [Fourth Embodiment]

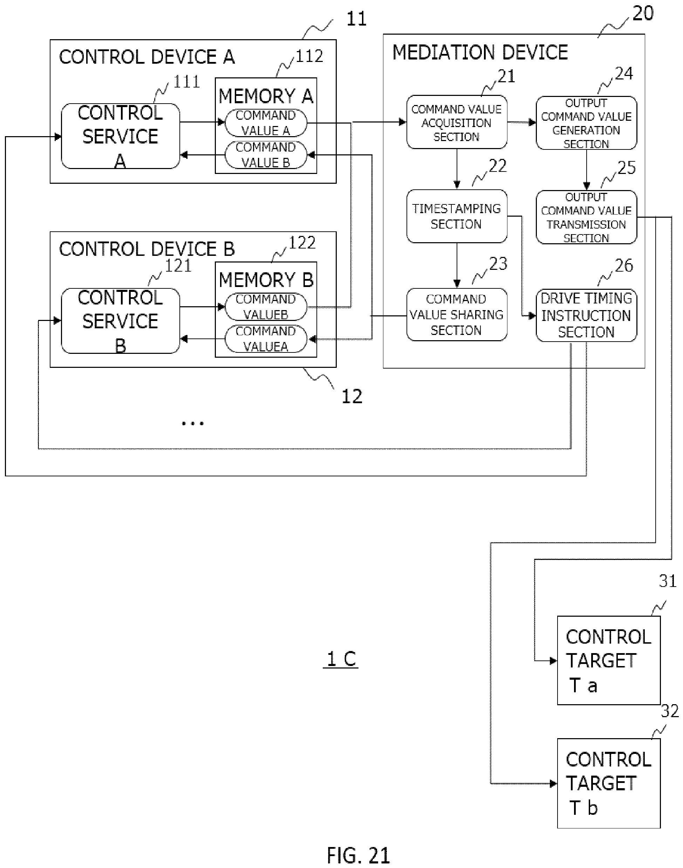

A case where a plurality of control targets exist will now be described. FIG. 21 is a block diagram illustrating a control system according to a fourth embodiment of the present invention.

A control system 1C is similar in basic configuration to the control system 1 depicted in FIG. 1 and will not be redundantly described in detail. In the case of the control system 1C, there are two control targets, namely, a control target Ta 31 and a control target Tb 32.

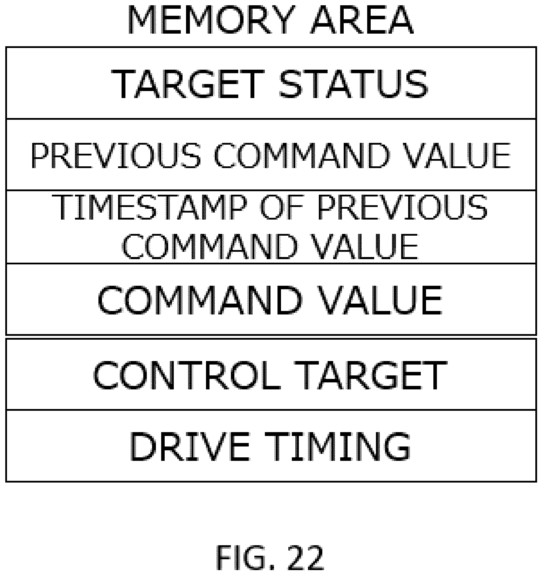

FIG. 22 is a conceptual diagram illustrating data to be stored in the memory area of the control device according to the fourth embodiment.

The memory area corresponds to, for example, the memory 112 or the memory 122 in FIG. 21. The memory stores a target status, a previous command value, a timestamp of the previous command value, a command value, a control target, and a drive timing.

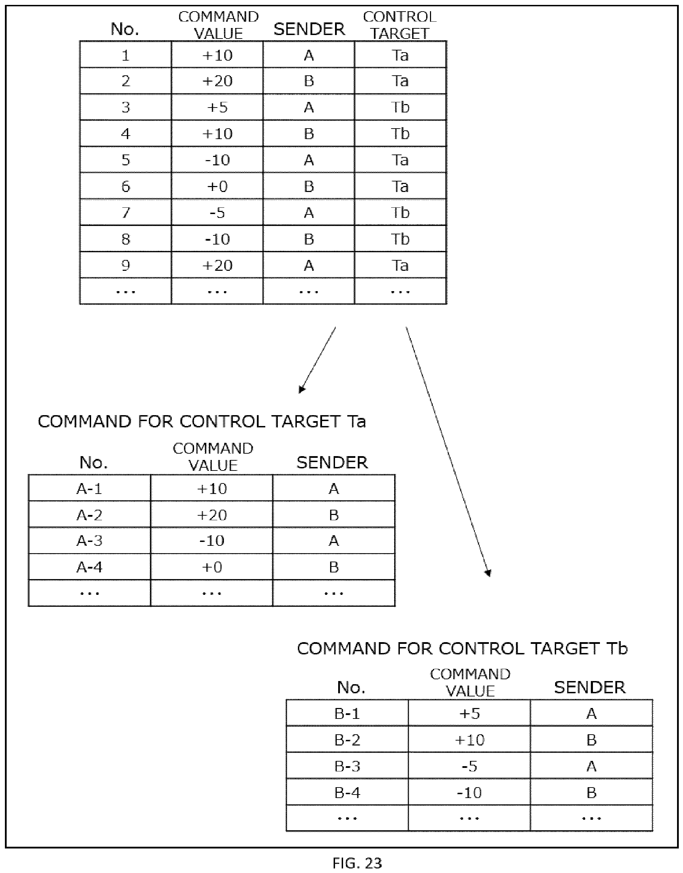

FIG. 23 is a conceptual diagram illustrating an example of processing by the mediation device according to the present embodiment in a case where a plurality of control targets exist.

The control service A and the control service B output individual command values for each of the plurality of control targets. In FIG. 23, a sender A corresponds to the control service A, and a sender B corresponds to the control service B. The mediation device 20 acquires the individual command values from a plurality of control services, classifies the acquired individual command values by control target, generates command sharing information and timing instruction information for each of the control targets, and notifies the control services of the generated information. The mediation device 20 generates the output command value for each of the control targets on the basis of the individual command values for each of the control targets which values are outputted from the control services, and outputs the generated output command value to each of the control targets.

### [Fifth Embodiment]

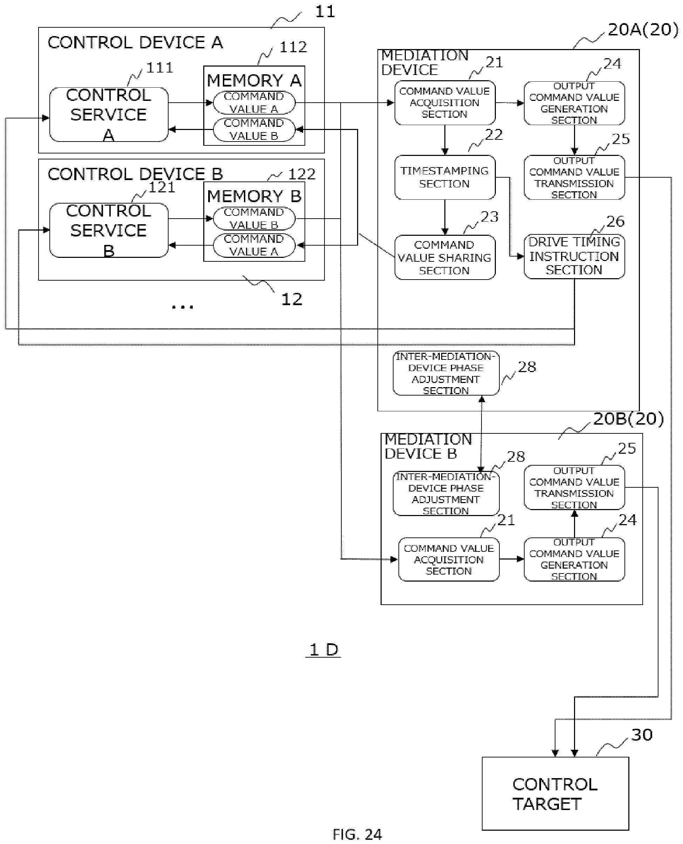

FIG. 24 is a block diagram illustrating a control system according to a fifth embodiment of the present invention.

A control system 1D is similar in basic configuration to the control system 1 depicted in FIG. 1. Therefore, only the differences will now be described. The control system 1D includes a plurality of mediation devices. Specifically, the control system 1D includes an incidental mediation device 20B in addition to a mediation device 20A. The mediation device 20A and the incidental mediation device 20B collaborate with each other with respect to phases that they are respectively responsible for, and for each control service, take turns generating the output command value on the basis of a command outputted from the control services.

The mediation device 20A and the incidental mediation device 20B are similar in basic configuration to the mediation device 20 depicted in FIG. 1. However, the mediation device 20A and the incidental mediation device 20B each additionally include an inter-mediation-device phase adjustment section 28.

The inter-mediation-device phase adjustment section 28 has a function of causing a plurality of mediation devices to collaborate with each other with respect to phases that they are respectively responsible for.

The inter-mediation-device phase adjustment sections 28 of the mediation device 20A and the incidental mediation device 20B may predetermine the respective phases that they are responsible for in the period of control, and periodically generate and output the output command value according to the period of control.

The inter-mediation-device phase adjustment sections 28 of the mediation device 20A and the incidental mediation device 20B may pass a transmission right to take turns generating and outputting the output command value.

After acquiring the transmission right and generating and outputting the output command value, the inter-mediation-device phase adjustment section 28 of the mediation device 20A releases the transmission right. Subsequently, after acquiring the released transmission right and generating and outputting the output command value, the inter-mediation-device phase adjustment section 28 of the incidental mediation device 20B releases the transmission right. In this manner, the transmission right is repeatedly acquired and released.

The above-described embodiments of the present invention are illustrative and not restrictive, and are not intended to limit the scope of the present invention to the above-described embodiments. Persons skilled in the art will appreciate that various modifications may be made without departing from the scope and spirit of the present invention. Further, the technical scope of the above-described embodiments includes the matters indicated in the following additional notes. However, the present invention is not limited to the following additional notes. Furthermore, the matters included in the above-described embodiments are not limited to the following additional notes.

As described above, the control system includes the plurality of control services and the mediation device. The plurality of control services each output an individual command value that is a command value for controlling the control target. The mediation device acquires the individual command values from the control services and generates, on the basis of the acquired individual command values, an output command value that is a command value to be given to the control target. The mediation device assigns, to each of the plurality of individual command values, an acquisition time indicating the time at which the individual command value was acquired, notifies the plurality of control services of command sharing information including the individual command values and the acquisition times, generates timing instruction information for indicating an instruction time that is the time of the next command for each of the control services, on the basis of the number of control services and the acquisition time of the individual command value of each of the control services, and notifies each of the control services of the generated timing instruction information. Each of the control services generates an individual command value on the basis of the individual command values and acquisition times included in the command sharing information and the instruction time included in the timing instruction information. Consequently, the mediation device generates an output command on the basis of commands from the plurality of control services, notifies each of the plurality of control services of commands issued by all of the plurality of control services and the times at which the commands were outputted, and gives an instruction on the timing of the next command. This reduces the man-hours required for manually changing the number of control services and their configuration, and makes it easy to implement multi-phase control by the plurality of control services.

Further, the output command value is indicated by the operation amount, the individual command value is indicated by the difference between the current operation amount and the previous operation amount, and the mediation device generates the operation amount that is to be indicated as the output command value, by integrating the difference indicated as the individual command value. Therefore, even if an included control service is such that the individual command value is expressed by the difference, it is easy to implement multi-phase control by the plurality of control services.

Further, the control services are the mixture of a control service for generating the operation amount as the individual command value and a control service for generating the difference in the operation amount as the individual command value. The mediation device determines, on the basis of the format of the acquired individual command value, whether it is the operation amount or the difference. If the individual command value is the difference, the mediation device sets, as the output command value, the current operation amount calculated from the previous operation amount and the difference. Meanwhile, if the individual command value is the operation amount, the mediation device sets the operation amount as the output command value. Consequently, even in a case where the control service for generating the operation amount as the individual command value and the control service for generating the difference in the operation amount as the individual command value are mixed together, it is easy to implement multi-phase control by the plurality of control services.

Moreover, the mediation device is included in the control device having the control services. This makes it easy to implement multi-phase control by the plurality of control services without installing a separate mediation device.

Additionally, the instruction time is an output time at which the individual command value is outputted by the control service, or is a drive time at which the control service starts processing to generate the individual command value. This makes it easy to implement multi-phase control by the plurality of control services on the basis of the output time or the drive time.

Further, the mediation device identifies time intervals between the instruction times that the respective control services are notified of, and generates the output command value in such a manner that the individual command values acquired from the respective control services are outputted at the identified time intervals. This enables the plurality of control services to provide multi-phase control at steady time intervals.

Further, the mediation device notifies the control services of the timing instruction information that includes a period during which the individual command values are outputted and a phase in which the individual command values are outputted within the period. The control services periodically output the individual command values at the time identified by the period and phase included in the timing instruction information. This enables the plurality of control services to provide multi-phase control over a steady period.

Moreover, in a case where a plurality of control targets exist, the control services each output an individual command value for each of the control targets, and the mediation device acquires the individual command values from the plurality of control services, classifies the acquired individual command values by control target, generates the command sharing information and the timing instruction information for each of the control targets, and notifies the control services of the generated information. The mediation device then generates the output command value for each of the control targets on the basis of the individual command values for each of the control targets which values are outputted from the control services, and outputs the generated output command value to each of the control targets. This makes it easy to implement multi-phase control by the plurality of control services even in the case where a plurality of control targets exist.

Further, the incidental mediation device is additionally provided, and the mediation device and the incidental mediation device collaborate with each other with respect to phases that they are respectively responsible for, and, for each control service, take turns generating the output command value on the basis of the individual command value outputted from the control services. As a result, even in the case where there are a plurality of mediation devices, they collaborate with each other with respect to phases, and thus enable the plurality of control services to provide multi-phase control.

Further, the mediation device integrates the plurality of individual command values into a common format and generates the output command value. As a result, even in a case where the individual command values in different formats coexist, such as the operation amount and the difference, the output command value can be integrated into a predetermined format and steadily outputted.

Moreover, there is provided a control mediation device that is included in the control system for controlling a control target by using a plurality of control services and that is configured to mediate individual command values that are commands from the control services, to the control target. The control mediation device includes a timestamping section, a command value sharing section, a timing instruction section, and an output command generation section. The timestamping section assigns, to each of the plurality of individual command values, an acquisition time indicating the time at which the individual command value was acquired. The command value sharing section notifies the plurality of control services of command sharing information including the individual command values and the acquisition times. The timing instruction section generates timing instruction information for specifying an instruction time that is the time of the next command for each of the control services, on the basis of the number of control services and the acquisition time of the individual command value of each of the control services, and notifies each of the control services of the generated timing instruction information. The output command generation section generates an output command value to be inputted to the control target, on the basis of the plurality of individual command values generated in each of the control services on the basis of the individual command values and acquisition times included in the command sharing information and the instruction time included in the timing instruction information. Consequently, the control mediation device generates an output command on the basis of commands from the plurality of control services, notifies each of the plurality of control services of commands issued by all of the plurality of control services and the times at which the commands were outputted, and gives an instruction on the timing of the next command. This reduces the man-hours required for manually changing the number of control services and their configuration, and makes it easy to implement multi-phase control by the plurality of control services.

Additionally, there is provided a control mediation method that is adopted by the control system for controlling a control target by using a plurality of control services and that is configured to mediate individual command values that are commands from the control services, to the control target. The control mediation method includes assigning, to each of the plurality of individual command values, an acquisition time indicating the time at which the individual command value was acquired, notifying the plurality of control services of command sharing information including the individual command values and the acquisition times, generating timing instruction information for specifying an instruction time that is the time of the next command for each of the control services, on the basis of the number of control services and the acquisition time of the individual command value of each of the control services, notifying each of the control services of the generated timing instruction information, and generating an output command value to be inputted to the control target, on the basis of the plurality of individual command values generated in each of the control services on the basis of the individual command values and acquisition times included in the command sharing information and the instruction time included in the timing instruction information. Consequently, the control mediation method generates an output command on the basis of commands from the plurality of control services, notifies each of the plurality of control services of commands issued by all of the plurality of control services and the times at which the commands were outputted, and gives an instruction on the timing of the next command. This reduces the man-hours required for manually changing the number of control services and their configuration, and makes it easy to implement multi-phase control by the plurality of control services.

## Claims

1. A control system comprising:
a plurality of control services that each output an individual command value that is a command value for controlling a control target; and
a mediation device that acquires the individual command values from the control services and generates, on a basis of the acquired individual command values, an output command value that is a command value to be given to the control target,
wherein the mediation device
assigns, to each of the individual command values, an acquisition time indicating a time at which the individual command value was acquired,
notifies the plurality of control services of command sharing information including the individual command values and the acquisition times, and
generates timing instruction information for indicating an instruction time that is a time of a next command for each of the control services, on a basis of the number of control services and the acquisition time of the individual command value of each of the control services, and notifies each of the control services of the generated timing instruction information, and
each of the control services generates an individual command value on a basis of the individual command values and acquisition times included in the command sharing information and the instruction time included in the timing instruction information.

2. The control system according to claim 1,
wherein the output command value is indicated by an operation amount,
the individual command value is indicated by a difference between a current operation amount and a previous operation amount, and
the mediation device generates an operation amount that is to be indicated as the output command value, by integrating the difference indicated as the individual command value.

3. The control system according to claim 1,
wherein the control services are a mixture of a control service for generating an operation amount as an individual command value and a control service for generating a difference in the operation amount as an individual command value, and
the mediation device determines, on a basis of a format of the acquired individual command value, whether the acquired individual command value is an operation amount or a difference, and when the individual command value indicates a difference, sets, as the output command value, a current operation amount calculated from a previous operation amount and the difference, and when the individual command value is an operation amount, sets the operation amount as the output command value.

4. The control system according to claim 1,
wherein the mediation device is included in a control device having the control services.

5. The control system according to claim 1,
wherein the instruction time is an output time at which the control services output the individual command values or a drive time at which the control services start processing to generate the individual command values.

6. The control system according to claim 1,
wherein the mediation device identifies time intervals between the instruction times that the respective control services are notified of, and generates the output command value in such a manner that the individual command values acquired from the respective control services are outputted at the identified time intervals.

7. The control system according to claim 1,
wherein the mediation device notifies the control services of the timing instruction information that includes a period during which the individual command values are outputted and a phase in which the individual command values are outputted within the period, and
the control services periodically output the individual command values at a time identified by the period and phase included in the timing instruction information.

8. The control system according to claim 1,
wherein a plurality of the control targets exist,
the control services each output an individual command value for each of the control targets, and
the mediation device
acquires the individual command values from the plurality of control services and classifies the acquired individual command values by control target,
generates the command sharing information and the timing instruction information for each of the control targets and notifies the control services of the generated information, and
generates the output command value for each of the control targets on a basis of the individual command values for each of the control targets which values are outputted from the control services, and outputs the generated output command value to each of the control targets.

9. The control system according to claim 1, further comprising:
an incidental mediation device,
wherein the mediation device and the incidental mediation device collaborate with each other with respect to phases that the mediation device and the incidental mediation device are respectively responsible for, and, for each control service, take turns generating the output command value on a basis of the individual command values outputted from the control services.

10. The control system according to claim 1,
wherein the mediation device integrates the plurality of individual command values into a common format and generates the output command value.

11. A control mediation device that is included in a control system for controlling a control target by using a plurality of control services and that is configured to mediate individual command values that are commands from the control services, to the control target, the control mediation device comprising:
a timestamping section that assigns, to each of the plurality of individual command values, an acquisition time indicating a time at which the individual command value was acquired;
a command value sharing section that notifies the plurality of control services of command sharing information including the individual command values and the acquisition times;
a timing instruction section that generates timing instruction information for specifying an instruction time that is a time of a next command for each of the control services, on a basis of the number of control services and the acquisition time of the individual command value of each of the control services, and notifies each of the control services of the generated timing instruction information; and
an output command generation section that generates an output command value to be inputted to the control target, on a basis of the plurality of individual command values generated in each of the control services on a basis of the individual command values and acquisition times included in the command sharing information and the instruction time included in the timing instruction information.

12. A control mediation method that is adopted by a control system for controlling a control target by using a plurality of control services and that is configured to mediate individual command values that are commands from the control services, to the control target, the control mediation method comprising:
assigning, to each of the plurality of individual command values, an acquisition time indicating a time at which the individual command value was acquired;
notifying the plurality of control services of command sharing information including the individual command values and the acquisition times;
generating timing instruction information for specifying an instruction time that is a time of a next command for each of the control services, on a basis of the number of control services and the acquisition time of the individual command value of each of the control services, and notifying each of the control services of the generated timing instruction information; and
generating an output command value to be inputted to the control target, on a basis of the plurality of individual command values generated in each of the control services on a basis of the individual command values and acquisition times included in the command sharing information and the instruction time included in the timing instruction information.
